# EUROPEAN PATENT APPLICATION

(11) **EP 1 544 577 A1**
(43) Date of publication of application: **22.06.2005**
(21) Application number: 04078344.1
(22) Date of filing: 10.12.2004
(51) Int. Cl.: G01C 21/36

(54) **Intersection route display in a navigation system for a motor vehicle**

(30) Priority: 18.12.2003 US 740082
(71) Applicant: Delphi Technologies, Inc., Troy, MI 48007 (US)
(72) Inventor: Cui, Dehua, Northville, MI 48167 (US)
(74) Representative: Denton, Michael John

(57) **Abstract**

An improved navigation system (100) that provides vehicle route navigation information in a more user friendly format than provided by commercially available navigation systems includes a processor (102) coupled to a display (120), a location device (140) and a memory subsystem (104). The memory subsystem (104) stores a navigation database that the processor (102) utilizes to display two-dimensional and three-dimensional models (400, 402) of a relevant highway intersection.

## Description

### Technical Field

The present invention is generally directed to route navigation for a motor vehicle and, more specifically, to intersection route navigation system for a motor vehicle.

### Background of the Invention

A recent Federal Highway Administration (FHWA) report has indicated that intersection-related motor vehicle accidents consistently make up about 23 percent of the total number of fatal automobile crashes and more than 50 percent of combined fatal and injury automobile crashes. A relatively large number of these accidents result from a driver of a motor vehicle making an incorrect maneuver at a highway intersection, which may generally be attributed to geometric and topological complexities of the highway intersection. Such incorrect maneuvers tend to increase during heavy traffic density. In an effort to aid a driver of a motor vehicle to reach a desired destination, many motor vehicle manufacturers have installed route guidance navigation systems, such as map-based navigation systems and turn-by-turn route guidance navigation systems, within various motor vehicle models.

A typical map-based route navigation system displays route guidance information on a map image, which has required a driver to devote a good deal of attention to extracting turn guidance information for a particular intersection from the map display. While these types of map displays are generally adequate for determining a current location of a motor vehicle, they are generally inadequate for allowing a driver to determine, in a short amount of time, where the driver needs to go as a typical map display contains a significant amount of information that is not directly relevant to navigation. Further, utilization of current map displays by a driver of a motor vehicle distracts the driver from current traffic situations as the driver must divert their eyes from the road for a relatively long time to accurately view the map display. As a result, navigation information is somewhat difficult for a driver to extract from a map-based navigation system, particularly during high traffic density.

Furthermore, turn-by-turn route guidance navigation systems tend to be inadequate for highway intersections with complex geometrical and topological characteristics. In such situations, visual arrows and/or spoken instructions may also tend to confuse a driver, rather than allow a driver to safely exit a currently travelled highway. In general, turn-by-turn route guidance navigation systems provide additional non-relevant information and do not provide an adequate view of a relevant portion of an intersection.

It would be desirable to provide an improved intersection route navigation system for a motor vehicle that limits display of non-relevant information.

### Summary of the Invention

The present invention is directed to an improved navigation system that provides vehicle route navigation information in a driver friendly format. Various embodiments of the present invention are directed to a system and method for providing improved motor vehicle route navigation information. A three-dimensional model of a highway intersection, which is included within a selected route and corresponds to an exit point from a currently traveled highway, is displayed within a motor vehicle. Additionally, a two-dimensional model of a route-specific portion of the highway intersection is also displayed. The two-dimensional model includes route guidance indicators for providing maneuvering instructions to an occupant of the motor vehicle.

In one embodiment, the route guidance indicators are directional arrows. In another embodiment, the two-dimensional model includes an entry node and an exit node connected by an appropriate ramp for the highway intersection. In general, a node defines the intersection of a motor vehicle's entry direction or one or more exit directions. In one embodiment, the ramp is arched and, in another embodiment, the ramp is straight. As a subset, the highway intersection may include a highway interchange.

These and other features, advantages and objects of the present invention will be further understood and appreciated by those skilled in the art by reference to the following specification, claims and appended drawings.

### Brief Description of the Drawings

The present invention will now be described, by way of example, with reference to the accompanying drawings, in which:
Fig. 1 is an exemplary electrical block diagram of a navigation system implemented within a motor vehicle;
Fig. 2 is an exemplary display of a highway intersection with turn guidance;
Fig. 3 is a view of an exemplary highway intersection illustrating entry and exit intersection nodes that are connected by an arch ramp;
Figs. 4A and 4B are exemplary displays of three-dimensional (3D) and two-dimensional (2D) views, respectively, of a highway intersection provided according to the present invention;
Figs. 5A and 5B are exemplary displays of 3D and 2D views, respectively, of the highway intersection of Fig. 4A provided according to a different aspect of the present invention; and
Figs. 6A and 6B are exemplary displays of 3D and 2D views, respectively, of another highway intersection provided according to the present invention.

### Description of the Preferred Embodiments

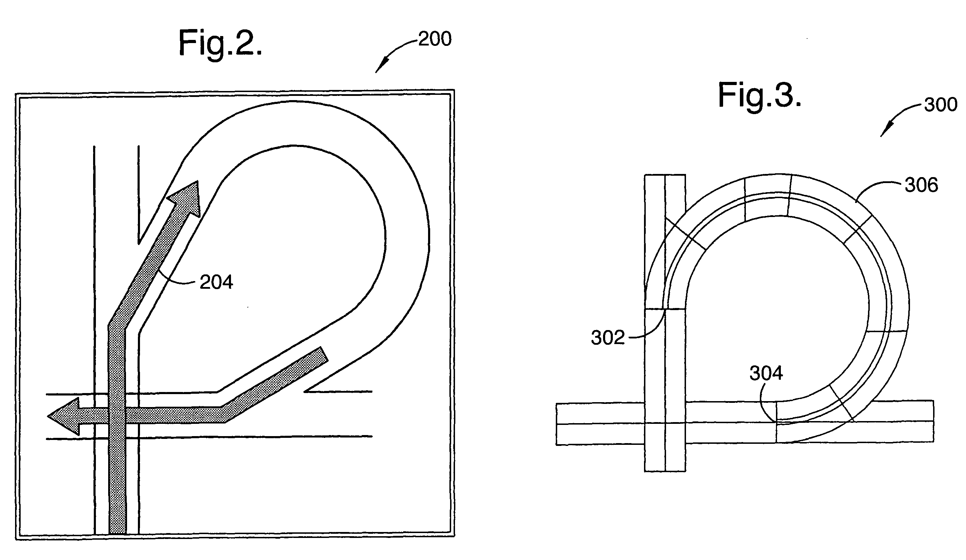

In general, a highway intersection turn guidance display, according to the present invention, may be implemented with three modules; a geometric model of the highway intersection; a data model of the highway intersection; and a three-dimensional rendering of the geometric model. The geometric model of the highway intersection emphasizes common geometric and topological characteristics. As used herein, the term "highway intersection" includes highway intersections and highway interchanges. According to the present invention, instead of modeling an entire highway intersection, only the routes relating to a travel destination, through the intersection, are provided with a 2D model. In this manner, a 2D highway intersection diagram 300 (see Fig. 3) is modeled as two simple intersecting nodes, with an entry intersection node 302 and an exit intersection node 304 connected by an arch ramp 306. As used herein, the term "node" defines an intersection of lines, with each line representing a motor vehicle entry or exit direction. In general, a node has one entry direction and at least one exit direction. A node also typically includes geometric information, such as exit and entry angles, and topological information, such as the number of node branches.

With reference to Fig. 2, a 2D highway intersection diagram 200 shows an exemplary view of a relevant highway intersection. In a location-enabled motor vehicle, whose position is, for example, tracked by a global positioning system (GPS) receiver, information on an upcoming intersection can be retrieved from an in-motor vehicle navigation database. In general, geometric modeling of an intersection of interest may include the number of exits in the intersection and the angle, e.g., relative to true North, of each exit, as well as the entry intersection node and exit intersection node, all of which are obtained from a navigation database. In addition, other properties of the exit classify the geometric or topological characteristic of the exit, such as a fork, a ramp, a merge and a straight exit, may be determined based on information retrieved from the navigation database.

According to the present invention, providing and relating a two-dimensional representation of a relevant portion of an intersection to that of a three-dimensional representation of the intersection allows a driver of a motor vehicle to more readily understand complex intersections and navigate therethrough.

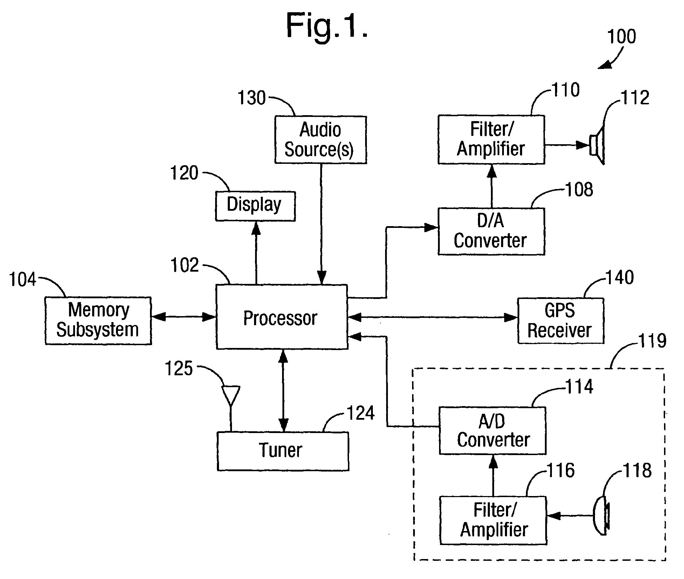

Fig. 1 depicts a block diagram of an exemplary navigation system 100 that may be implemented within a motor vehicle (not shown). As shown, the system 100 includes a processor 102 coupled to global positioning system (GPS) receiver 140, an AM/FM tuner 124, audio sources 130, e.g., including a compact disk (CD) player, a digital versatile disk (DVD) player, a cassette tape player and an MP3 file player, and a display 120. The processor 102 controls the display of route guidance information on the display 120, as dictated by manual and/or voice input supplied by a user of the system 100. In systems that include voice recognition technology, different users can be distinguished from each other by, for example, a voice input or a manual input, and the guidance information may be customized for the user.

The processor 102 may also control audio provided to a listener, via the speaker 112, and may also supply various navigation information to a user, via the display 120 and/or the speaker 112. As used herein, the term processor may include a general purpose processor, a microcontroller (i.e., an execution unit with memory, etc., integrated within a single integrated circuit), an application specific integrated circuit (ASIC), a programmable logic device (PLD) or a digital signal processor (DSP). The processor 102 is also coupled to a memory subsystem 104, which includes an application appropriate amount of memory (e.g., volatile and non-volatile memory), which may provide storage for one or more speech recognition applications, as well as a navigation database and an application that accesses the navigation database and renders the 3D and 2D highway intersection diagrams.

As is also shown in Fig. 1, an audio input device 118 (e.g., a microphone) is coupled to a filter/amplifier module 116. The filter/amplifier module 116 filters and amplifies the voice input provided by a user through the audio input device 118. The filter/amplifier module 116 is also coupled to an analog-to-digital (A/D) converter 114, which digitizes the voice input from the user and supplies the digitized voice to the processor 102 which may execute a speech recognition application, which causes the voice input to be compared to system recognized commands and/or may be used to identify a specific user. In general, the audio input device 118, the filter/amplifier module 116 and the A/D converter 114 form a voice input circuit 119.

The processor 102 may execute various routines in determining whether the voice input corresponds to a system recognized command and/or a specific operator. The processor 102 may also cause an appropriate voice output to be provided to the user through an audio output device 112. The synthesized voice output is provided by the processor 102 to a digital-to-analog (D/A) converter 108. The D/A converter 108 is coupled to a filter/amplifier section 110, which amplifies and filters the analog voice output. The amplified and filtered voice output is then provided to audio output device 112 (e.g., a speaker).

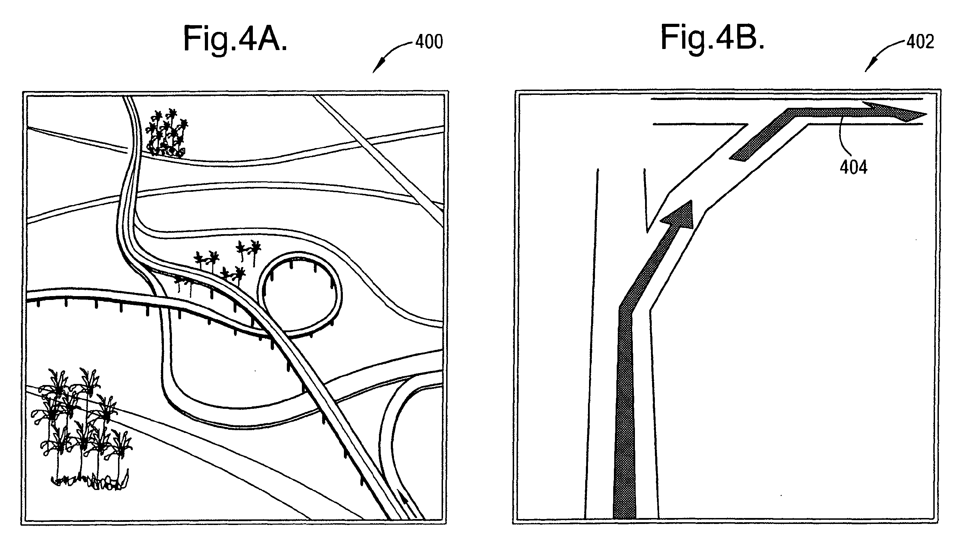

With reference to Fig. 4A, a three-dimensional representation of an exemplary relevant highway intersection 400 is depicted. Fig. 4B, shows a two-dimensional representation 402 of a relevant portion of the intersection 400. As is shown, the representation 402 includes directional arrows 404 that aid a driver in understanding how to navigate through the highway intersection 400. As is discussed above, the intersection 400 and its two-dimensional representation 402 are both displayed on the display 120 and provide information that is readily deciphered in heavy traffic conditions.

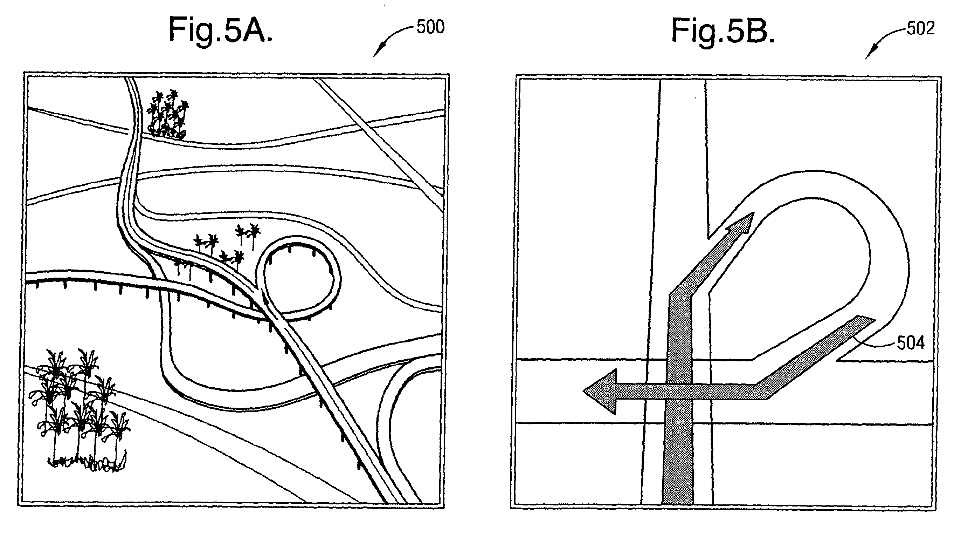

Fig. 5A depicts a three-dimensional representation of another relevant exemplary highway intersection 500. With reference to Fig. 5B, a two-dimensional representation 502 of a relevant portion of the intersection 500 is shown. The representation 502 includes directional arrows 504 that aid a driver in understanding how to navigate through the highway intersection 500. The intersection 500 and its two-dimensional representation 502 are both displayed on the display 120 and provide information that is also readily decipherable in heavy traffic conditions.

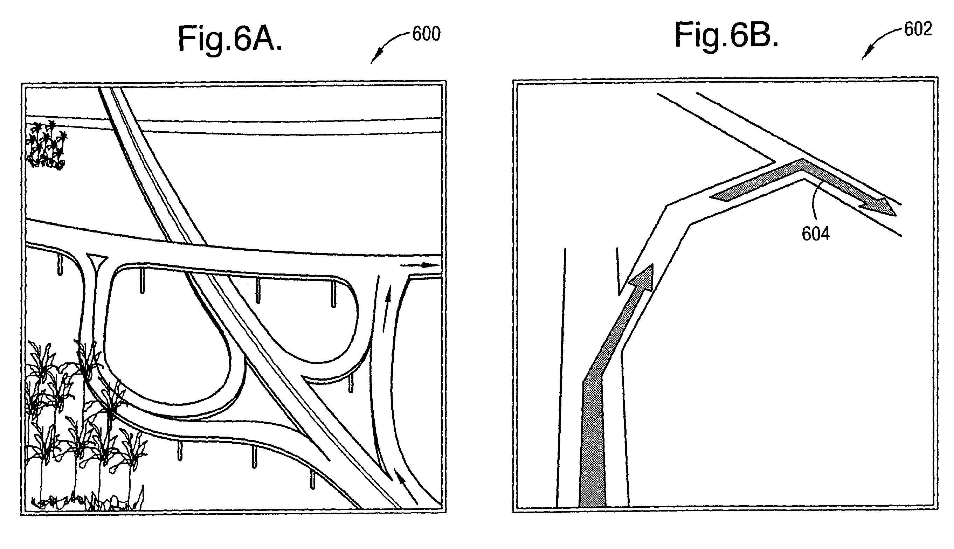

Fig. 6A shows a three-dimensional representation of another exemplary highway intersection 600. Fig. 6B depicts a two-dimensional representation 602 of a relevant portion of the intersection 600. As is shown, the representation 602 includes directional arrows 604 that aid a driver in understanding how to navigate through the highway intersection 600. As above, the intersection 600 and its two-dimensional representation 602 are both displayed on the display 120 and provide information that is readily deciphered in heavy traffic conditions.

Accordingly, a number of displays and a system for providing the displays have been described herein that allow a driver to more readily navigate an intersection of interest.

The above description is considered that of the preferred embodiments only. Modifications of the invention will occur to those skilled in the art and to those who make or use the invention. Therefore, it is understood that the embodiments shown in the drawings and described above are merely for illustrative purposes and not intended to limit the scope of the invention, which is defined by the following claims as interpreted according to the principles of patent law, including the doctrine of equivalents.

## Claims

1. A method for providing improved motor vehicle route navigation information, comprising the steps of:
displaying a three-dimensional model of a highway intersection within a motor vehicle (400), wherein the highway intersection is included within a selected route and corresponds to an exit point from a currently traveled highway; and
displaying a two-dimensional model of a route specific portion of the highway intersection (402), wherein the two-dimensional model includes route guidance indicators for providing maneuvering instructions to an occupant of the motor vehicle.

2. The method of claim 1, wherein the route guidance indicators are directional arrows.

3. The method of claim 1, wherein the two-dimensional model includes an entry node and an exit node connected by an appropriate ramp for the highway intersection.

4. The method of claim 3, wherein the ramp is arched.

5. The method of claim 3, wherein the ramp is straight.

6. The method of claim 1, wherein the highway intersection is a highway interchange.

7. A navigation system (100) for a motor vehicle, comprising:
a display (120);
a global positioning system (GPS) receiver (140);
a processor (102) coupled to the display (120) and the GPS receiver (140); and
a memory subsystem (104) coupled to the processor (102), the memory subsystem (104) storing code that when executed by the processor (102) instructs the processor (102) to perform the steps of:
determining a location of a motor vehicle based upon information provided by the GPS receiver (140);
displaying a three-dimensional model of a highway intersection on the display based upon the location of the motor vehicle (400), wherein the highway intersection is included within a selected route and corresponds to an exit point from a currently traveled highway; and
displaying a two-dimensional model of a route specific portion of the highway intersection on the display (402), wherein the two-dimensional model includes route guidance indicators for providing maneuvering instructions to an occupant of the motor vehicle.

8. The system (100) of claim 7, wherein the route guidance indicators are directional arrows.

9. The system (100) of claim 7, wherein the two-dimensional model includes an entry node and an exit node connected by an appropriate ramp for the highway intersection.

10. The system (100) of claim 9, wherein the ramp is arched.

11. The system (100) of claim 9, wherein the ramp is straight.

12. The system (100) of claim 7, wherein the highway intersection is a highway interchange.

13. The system (100) of claim 7, wherein the memory subsystem (104) stores a navigation database that provides information that is used to build the three-dimensional model of the highway intersection and the two-dimensional model of the route specific portion of the highway intersection.

14. The system (100) of claim 13, wherein the navigation database includes properties of a given exit which include whether the exit is forked, a ramp, straight and merges with an entrance.

15. A navigation system (100) for a motor vehicle, comprising:
a display (120);
a location device (140);
a processor (102) coupled to the display (120) and the location device (140); and
a memory subsystem (104) coupled to the processor (102), the memory subsystem (104) storing code that when executed by the processor (102) causes the processor (102) to perform the steps of:
determining a location of a motor vehicle based upon information provided by the location device (140);
displaying a three-dimensional model of a highway intersection on the display based upon the location of the motor vehicle (400), wherein the highway intersection is included within a selected route; and
displaying a two-dimensional model of a route specific portion of the highway intersection on the display (402), wherein the two-dimensional model includes route guidance indicators for providing maneuvering instructions to an occupant of the motor vehicle.

16. The system (100) of claim 15, wherein the route guidance indicators are directional arrows.

17. The system (100) of claim 15, wherein the two-dimensional model includes an entry node and an exit node connected by an appropriate ramp for the highway intersection.

18. The system (100) of claim 17, wherein the ramp is one of arched and straight.

19. The system (100) of claim 15, wherein the highway intersection is a highway interchange.

20. The system (100) of claim 15, wherein the memory subsystem (104) stores a navigation database that provides information that is used to build the three-dimensional model of the highway intersection and the two-dimensional model of the route specific portion of the highway intersection.
